(19) Europäisches Patentamt / European Patent Office / Office européen des brevets

(11) EP 3 728 512 B1

(12) **FASCICULE DE BREVET EUROPEEN**

(45) Date de publication et mention de la délivrance du brevet:
**03.07.2024 Bulletin 2024/27**

(21) Numéro de dépôt: **18815213.6**

(22) Date de dépôt: **13.12.2018**

(51) Classification Internationale des Brevets (IPC):
***C09K 8/588*** *(2006.01)* ***E21B 43/16*** *(2006.01)*
***C09K 8/584*** *(2006.01)*

(52) Classification Coopérative des Brevets (CPC):
**C09K 8/588; C09K 8/584**

(86) Numéro de dépôt international:
**PCT/EP2018/084704**

(87) Numéro de publication internationale:
**WO 2019/121298 (27.06.2019 Gazette 2019/26)**

(54) **FORMULATIONS AQUEUSES DE TENSIOACTIFS ET POLYMERES ASSOCIATIFS POUR LA RECUPERATION ASSISTEE DU PETROLE**

WÄSSRIGE FORMULIERUNGEN VON TENSIDEN UND ASSOZIATIVEN POLYMEREN ZUR UNTERSTÜTZTEN GEWINNUNG VON ERDÖL

AQUEOUS FORMULATIONS OF SURFACTANTS AND ASSOCIATIVE POLYMERS FOR THE ASSISTED RECOVERY OF PETROLEUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2017 FR 1762401**

(43) Date de publication de la demande:
**28.10.2020 Bulletin 2020/44**

(73) Titulaire: **Energy Solutions (US) LLC**
**Princeton, NJ 08540 (US)**

(72) Inventeurs:
- **MIRALLES, Vincent**
**33000 BORDEAUX (FR)**
- **MORVAN, Mikel**
**33600 PESSAC (FR)**
- **WILSON, David James**
**60580 COYE LA FORET (FR)**

(74) Mandataire: **Osha BWB**
**2, rue de la Paix**
**75002 Paris (FR)**

(56) Documents cités:
**WO-A1-03/054350** **WO-A1-03/056130**
**WO-A1-2014/167056** **WO-A1-2014/167059**
**FR-A1- 2 967 686**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 728 512 B1

## Description

La présente invention a trait au domaine des tensioactifs et polymères utilisés pour la récupération assistée du pétrole brut des formations souterraines, et en particulier aux problématiques de compatibilité de ces espèces lorsqu'elles sont employées conjointement dans des étapes de récupération assistée du pétrole.

Les documents WO 2014/167059 A1 et WO 2014/167056 A1 font mention d'un fluide d'extraction destiné à des opérations de balayage ou de contrôle de la perméabilité relative et comprenant, en milieu aqueux, un polymère associatif et un tensioactif labile.

Lors de l'extraction du pétrole hors d'un réservoir hydrocarboné (réservoir pétrolifère telle qu'une formation rocheuse, consolidée ou non, ou un sable, par exemple), selon une première étape dite de « récupération primaire », le pétrole est entraîné hors d'un puits de production par la surpression régnant naturellement au sein du réservoir. Cette récupération primaire ne permet d'accéder qu'à une faible quantité du pétrole contenu dans le réservoir, typiquement de l'ordre de 10 à 15% tout au plus.

Pour permettre de poursuivre l'extraction du pétrole suite à cette récupération primaire, des méthodes secondaires de production sont employées, quand la pression du réservoir devient insuffisante pour déplacer le pétrole encore en place. Typiquement, on injecte un fluide (ré-injection de l'eau produite diluée ou non, injection d'eau de mer ou de rivière, ou encore injection de gaz, par exemple) au sein du réservoir hydrocarboné, en vue d'exercer au sein du réservoir une surpression propre à entraîner le pétrole vers le(s) puits de production. Une technique usuelle dans ce cadre est l'injection d'eau (désignée également par inondation ou « *waterflooding* »), dans laquelle de grands volumes d'eau sont injectés sous pression dans le réservoir via des puits d'injecteurs. L'eau injectée entraîne une partie du pétrole qu'elle rencontre et le pousse vers un ou plusieurs puits producteur(s). Les méthodes secondaires de production telles que l'injection d'eau ne permettent toutefois d'extraire qu'une partie relativement faible des hydrocarbures en place (typiquement de l'ordre de 30%). Ce balayage partiel est dû notamment au piégeage de l'huile par les forces capillaires, aux différences de viscosité et de densité existant entre le fluide injecté et les hydrocarbures en place, ainsi qu'à des hétérogénéités à des échelles micro- ou macroscopiques (échelle des pores et aussi échelle du réservoir).

Pour essayer de récupérer le reste du pétrole, qui demeure dans les formations souterraines à l'issue de la mise en oeuvre des méthodes primaires et secondaires de production, il a été proposé différentes techniques dites de « récupération assistée du pétrole » (ou récupération assistée (ou améliorée) d'hydrocarbures RAH), ou bien encore « EOR » (pour l'anglais « *Enhanced Oil Recovery* »).

Parmi les techniques de l'EOR, on peut notamment citer des techniques s'apparentant à l'injection d'eau (inondation) précitée, mais employant un fluide d'extraction à base d'une eau comprenant des additifs tels que, par exemple, des agents tensioactifs solubles dans l'eau (on parle alors typiquement de « *surfactant flooding* »), ou bien encore des polymères épaississants (viscosants), typiquement des dérivés de polyacrylamides (on parle alors de « *polymer flooding* »).

L'emploi d'agents tensioactifs selon le « *surfactant flooding* » induit notamment une diminution de la tension interfaciale eau/pétrole, qui est typiquement propre à augmenter le nombre capillaire de plusieurs ordres de grandeurs et donc à assurer un entraînement plus efficace du pétrole piégé dans les constrictions de pores.

Les polymères épaississants (viscosants) utilisés en « *polymer flooding* » induisent quant à eux une modification de la viscosité du fluide injecté, qui permet d'améliorer l'efficacité du balayage par le fluide d'extraction (le pétrole est mobilisé de façon plus homogène et plus efficace compte tenu de la modification de viscosité du fluide injecté).

Selon une variante particulière, il a été proposé, selon la technique dite de *« surfactant polymer flooding »* de combiner les effets des tensioactifs et des polymères précités, en utilisant des mélanges comprenant à la fois des tensioactifs et des polymères épaississants (viscosants).

Une problématique rencontrée avec les mélanges précités de type tensioactifs/polymères est la compatibilité entre les tensioactifs et les polymères, et ce tout particulièrement lorsqu'on emploie des formulations qui conduisent à la formation de vésicules, du type de celles décrites par exemple dans le Journal de Physique II, France, volume 3 (1993), pages 1255-1270. Dans la plupart des cas, avec les formulations tensioactifs/polymères de ce type on observe une diminution de compatibilité du mélange de tensioactifs et de polymères qui, sauf à diluer de façon conséquente le milieu, s'accompagne typiquement de l'apparition d'une turbidité, voire de phénomènes de séparation de phase macroscopique, ce qui réduit les propriétés apportées par le tensioactif et le polymère.

Cette problématique est encore plus marquée en présence de sels, ce qui est une difficulté dans le cadre d'opérations d'extraction pétrolière, où la présence de sels en quantité non négligeable est plus que courante, voire systématique : en effet, à titre de milieu solvant, les fluides d'injection employés en EOR utilisent très souvent de l'eau de mer ou de l'eau de production, qui sont des saumures à forte, voire très forte, teneur en sels.

Par ailleurs, la problématique précitée de compatibilité entre tensioactifs peut être encore exacerbée lorsque la température augmente. Ce qui est une autre source de difficultés dans le domaine de l'extraction pétrolière où les fluides d'extraction sont très souvent utilisés à des températures assez élevées (suite à leur injection sous pression dans des formations souterraines, les fluides sont typiquement portés à des températures supérieures ou égale à 70°C,

voire supérieures ou égale à 100°C).

Un but de la présente invention est de fournir de nouveaux type de mélanges tensioactifs/polymères adaptés à l'EOR, pour lequel la problématique précitée de compatibilité entre tensioactifs et polymères est inhibée le plus possible.

A cet effet, la présente invention fournit des mélanges tensioactifs/polymères comprenant des polymères associatifs particuliers, à savoir des polymères tel qu'obtenus à l'issue d'une polymérisation radicalaire micellaire, dont les inventeurs ont maintenant mis en évidence qu'ils présentent une compatibilité améliorée avec les tensioactifs employés dans le cadre de l'EOR, et tout particulièrement avec les tensioactifs du type formant des vésicules.

Plus précisément, un objet de la présente invention est une formulation aqueuse adaptée à titre de fluide d'extraction pour la récupération assistée du pétrole, qui comprend :

(i) un tensioactif comprenant :

- au moins un premier tensioactif anionique de type sulfonate ; et
- au moins un deuxième tensioactif anionique choisi parmi les alkyl éther sulfates AES, les alkyl glycéryl éther sulfonates AGES, les alkyl éther carboxylates, les styril phénol alcoxylate sulfates, les styril phénol alcoxylate phosphates, et mélanges de ceux-ci ;
  et

(ii) au moins un polymère tel qu'obtenu selon une étape (E) de polymérisation radicalaire micellaire dans laquelle on met en contact, au sein d'un milieu aqueux (M)

- au moins un monomère hydrophile, solubilisé ou dispersé dans ledit milieu aqueux (M) ;

- au moins un monomère hydrophobe sous la forme d'une solution micellaire, ladite solution micellaire contenant, à l'état dispersé au sein du milieu (M), des micelles comprenant ledit au moins un monomère hydrophobe ; et

- au moins un amorceur de polymérisation radicalaire, cet amorceur étant optionnellement hydrosoluble ou hydrodispersible ;

- optionnellement, au moins un agent de contrôle de polymérisation radicalaire.

Les polymères utilisés dans le cadre de la présente invention ont les caractéristiques particulières des polymères obtenus selon la technique de polymérisation radicalaire micellaire.

Par "polymérisation radicalaire micellaire", on entend au sens de la présente description une polymérisation qui sera aussi désignée par "polymérisation micellaire" à des fins de concision dans la suite de la description, dans laquelle on synthétise des polymères séquencés de type multiblocs par copolymérisation de monomères hydrophiles et de monomères hydrophobes au sein d'un milieu dispersant aqueux (typiquement de l'eau ou un mélange eau/alcool) qui comprend :

- les monomères hydrophiles à l'état solubilisé ou dispersé dans ledit milieu ;
  et

- les monomères hydrophobes présents au sein de micelles.

Les micelles employées en polymérisation micellaire sont formées dans le milieu aqueux par un agent tensioactif formant ces micelles, qui est introduit dans ledit milieu à une concentration supérieure à sa concentration micellaire critique (cmc).

Selon un mode particulier, les monomères hydrophobes présents au sein de micelles employés en polymérisation micellaire peuvent être des monomères qui, en eux-mêmes ont la propriété de former des micelles, sans avoir pour ce faire besoin d'ajouter des agents tensioactifs additionnels (ces monomères sont dits «automicellisables» dans la suite de la description). Selon ce mode particulier, l'agent tensioactif employé pour former les micelles peut être le monomère hydrophobe auto-micellisable lui-même employé sans autre agent tensioactif, mais la présence d'un agent tensioactif additionnel n'est cependant pas exclue lorsqu'on emploie des monomères automicellisables.

Ainsi, au sens de la présente description, lorsqu'il est fait mention de « monomères hydrophobes au sein de micelles», cette notion englobe notamment :

- mode 1 : des monomères hydrophobes présents au sein de micelles formées par des agents tensioactifs, où lesdits agents tensioactifs sont distincts des monomères hydrophobes ; et /ou

- mode 2 : des monomères automicellisables formant par eux-mêmes des micelles en milieu aqueux, avec des micelles qui peuvent alors être formées en tout ou partie par lesdits monomères automicellisables.

Les modes 1 et 2 précités sont compatibles et peuvent coexister (monomères hydrophobes non automicellisables au sein de micelles formées par un autre monomère auto-micellisable par exemple ; ou bien encore micelles comprenant une association d'agents tensioactifs et de monomères auto-micellisables).

En polymérisation micellaire, quelle que soit la nature exacte des micelles, les monomères hydrophobes contenus dans les micelles sont dits en "solution micellaire". La solution micellaire à laquelle il est fait référence est un système micro-hétérogène qui est généralement isotrope, optiquement transparent et thermodynamiquement stable.

A noter qu'une solution micellaire du type de celle employée en polymérisation micellaire est à distinguer d'une microémulsion. En particulier, contrairement à une microémulsion, une solution micellaire se forme à toute concentration dépassant la concentration micellaire critique du tensioactif employé, avec comme seule condition que le monomère hydrophobe soit soluble au moins en une certaine mesure au sein de l'espace interne des micelles. Une solution micellaire se différencie par ailleurs d'une émulsion de par l'absence de phase homogène interne : les micelles contiennent un très faible nombre de molécules (moins de 1000 typiquement, en général moins de 500 et typiquement de 1 à 100, avec le plus souvent 1 à 50 monomères et au plus quelques centaine de molécules d'agent tensioactif additionnel le cas échéant). Par ailleurs le plus souvent, une solution micellaire est transparente vis-à-vis de la lumière visible, compte tenu de la faible taille des micelles qui ne conduit pas à des phénomènes de réfraction, contrairement aux gouttes d'une émulsion, qui réfractent la lumière et lui confère son aspect trouble ou blanc caractéristique.

La technique de polymérisation micellaire conduit à des polymères séquencés caractéristiques qui contiennent chacun plusieurs blocs hydrophobes sensiblement de même taille et où cette taille peut être contrôlée. En effet, compte tenu du cantonnement des monomères hydrophobes au sein des micelles, chacun des blocs hydrophobes formés et de taille contrôlé et contient sensiblement un nombre $n_H$ défini de monomères hydrophobe, ce nombre $n_H$ pouvant être calculé comme suit (Macromolecular Chem. Physics, 202, 8, 1384-1397, 2001) :

$$n_H = N_{agg} . [M_H] / ( [\text{tensioactif}] - \text{cmc})$$

formule dans laquelle :

$N_{agg}$ est le nombre d'agrégation du tensioactif, qui reflète le nombre de tensioactif présent dans chaque micelle ;
$[M_H]$ est la concentration molaire en monomère hydrophobe dans le milieu et [tensioactif] est la concentration molaire en tensioactif dans le milieu ;
cmc désigne la concentration (molaire) micellaire critique.

La technique de polymérisation micellaire permet ainsi un contrôle intéressant des motifs hydrophobes introduit dans les polymères formés, à savoir :

- un contrôle global de la fraction molaire d'unités hydrophobes dans le polymère (en modulant le rapport des concentrations des deux monomères); et
- un contrôle plus spécifique du nombre d'unités hydrophobes présentes dans chacun des blocs hydrophobes (en modifiant les paramètres influençant le $n_H$ défini ci-dessus).

Les polymères obtenus en polymérisation micellaire sont des polymères séquencés amphiphiles qui possèdent une structure maîtrisée spécifique, à savoir, schématiquement, à base d'un squelette formé d'unités hydrophiles (hydrosolubles ou hydrodispersdibles) interrompu en différents endroits par des petites séquences hydrophobes, ces séquences hydrophobes ("blocs hydrophobes") étant toutes de taille sensiblement identiques.

Selon un mode de réalisation préféré, les polymères employés selon l'invention sont des polymères tels qu'obtenus selon une étape (E) de polymérisation radicalaire micellaire qui est spécifiquement une polymérisation radicalaire de type contrôlée, à savoir conduite en présence d'un agent de contrôle de la polymérisation radicalaire. Par *"agent de contrôle de polymérisation radicalaire"* (ou plus simplement *"agent de contrôle"*), on entend, au sens de la présente description, un composé capable de rallonger le temps de vie des chaînes polymères en croissance dans une réaction de polymérisation et, de préférence, de conférer à la polymérisation un caractère vivant ou contrôlé.

Lorsqu'un agent de contrôle de polymérisation radicalaire du type précité est employé, en plus des avantages liés à la mise en oeuvre de la polymérisation micellaire, il s'avère possible de contrôler la masse moléculaire moyenne des polymères tels qu'obtenus à l'issue de l'étape (E) : cette masse peut être contrôlée par la quantité d'agent de contrôle utilisée (pour une quantité donnée de monomères hydrophiles, la masse diminue généralement à mesure que cette quantité augmente).

Selon un mode de réalisation possible, on peut utiliser dans l'étape (E) un agent de contrôle qui est un agent de contrôle de polymérisation radicalaire de type irréversible, typiquement choisi parmi les mercaptans comme l'acide mercaptopropionique, l'acide thioglycolique, le mercaptoethanol, les alcools primaires ou secondaires comme l'éthanol ou l'isopropanol, ou bien encore l'acide formique et ses sels.

Alternativement, selon un mode de réalisation particulièrement intéressant, l'agent de contrôle employé dans l'étape (E) est un agent de transfert réversible tel que mis en oeuvre dans les polymérisations radicalaires contrôlées désignés sous la terminologie RAFT ou MADIX, qui mettent typiquement en oeuvre un procédé de transfert réversible par addition-fragmentation, comme ceux décrits par exemple dans WO96/30421, WO 98/01478, WO 99/35178, WO 98/58974, WO 00/75207, WO 01/42312, WO 99/35177, WO 99/31144, FR2794464 ou WO 02/26836.

Lorsqu'un agent de contrôle de polymérisation radicalaire de type réversible est employé, les polymères tels qu'obtenus à l'issue de l'étape (E) présentent, en plus des avantages liés à la mise en oeuvre de la polymérisation micellaire (à savoir le contrôle de la fraction molaire d'unités hydrophobe dans les polymères ; et (ii) un contrôle du nombre d'unités hydrophobes dans chaque séquence hydrophobe) :

- un contrôle de la masse moléculaire moyenne (qui peut être finement contrôlée par la quantité d'agent de contrôle utilisé : pour une quantité donnée de monomères hydrophiles, la masse diminue à mesure que cette quantité augmente) ; et

- un contrôle de la distribution des blocs hydrophobes au sein des différentes chaînes

- l'obtention de chaînes polymères à caractère vivant, offrant la possibilité de préparer des polymères complexes à architecture contrôlée.

Ces avantages sont tout particulièrement marqués lorsque l'agent de contrôle de polymérisation radicalaire employé est un composé soluble ou dispersible dans le milieu aqueux (M) employé dans l'étape (E), et/ou lorsque cet agent de contrôle n'est pas propre à pénétrer dans les micelles de la solution micellaire. Cet effet peut également être observé dans le cas où l'agent de contrôle n'est pas soluble/dispersible dans le milieu (M) ou lorsque l'agent de contrôle est propre à pénétrer dans les micelles.

Selon un mode de réalisation intéressant, l'agent de contrôle de polymérisation radicalaire employé dans l'étape (E) est un composé qui comprend un groupe thiocarbonylthio -S(C=S)-. Ainsi, par exemple, il peut s'agir d'un composé qui comprend un groupe xanthate (porteur de fonctions -SC=S-O-), par exemple un xanthate. D'autres types d'agent de contrôle employés en polymérisation radicalaire contrôlée peuvent être envisagés (par exemple du type de ceux employés en CMP, en ATRP, ou en NMP).

Selon un mode particulier, l'agent de contrôle employé dans l'étape (E) peut être une chaîne polymère issue d'une polymérisation radicalaire contrôlée et porteuse d'un groupement propre à contrôler une polymérisation radicalaire (chaîne polymère dite de type « vivante », de type bien connu en soi). Ainsi, par exemple, l'agent de contrôle peut être une chaîne polymère (de préférence hydrophile ou hydrodispersible) fonctionnalisée en bout de chaîne par un d'une par un groupe xanthate ou plus généralement comprenant un groupe -SC=S-, par exemple obtenu selon la technologie RAFT/MADIX.

Alternativement, l'agent de contrôle employé dans l'étape (E) est un composé non polymère porteur d'un groupement assurant le contrôle de la polymérisation radicalaire, notamment un groupe thiocarbonylthio -S(C=S)-.

Les travaux qui ont été effectués par les inventeurs dans le cadre de la présente invention ont maintenant permis de mettre en évidence que les polymères tels qu'obtenus selon l'étape (E) de polymérisation radicalaire micellaire précitée présentent une compatibilité accrue avec les tensioactifs, et notamment ceux utilisés en EOR, et ce tout particulièrement lorsque les polymères sont issus d'une étape (E) mettant en oeuvre un agent de contrôle du type précité. En particulier, contrairement aux autres polymères viscosants utilisés dans l'état de la technique, les polymères tels qu'obtenus selon l'étape (E) forment des mélanges plus efficaces avec les tensioactifs employés dans les techniques de « *surfactant polymer flooding* », avec une tendance beaucoup plus réduite à l'apparition de turbidité ou de séparation de phases, et ce notamment dans des formulations où les constituants ont une nature et des concentrations propres à la formation de vésicules.

En particulier, les polymères utiles selon l'invention s'avèrent tout particulièrement intéressants avec les tensioactifs comprenant ou constitués par:

- au moins un premier tensioactif anionique de type sulfonate,
  et notamment :

  - les sulfonates d'oléfines internes, de préférence des sulfonates d'oléfines internes en C15 à C28, par exemple en C20-24

  - les alkylarylsulfonate, et notamment les alkyl benzène sulfonate (ABS), où le groupe alkyle comporte de préférence au moins 15 atomes de carbone, par exemple entre 15 et 24 atomes de carbone, comme par exemple un alkyl aryl sulfonate avec un alkyl en C15-18
  - les sulfonates et/ou disulfonates de composés alpha-sulfocarbonyle tels que décrits notamment dans WO 2016/177817, comme par exemple des sulfonates et disulfonates dérivés de cétones internes en C15-C35
  - les sulfosuccinates et sulfosuccinamates ; et

- au moins un deuxième tensioactif anionique choisi parmi :

  - les tensioactifs anioniques de type alkyl éther sulfates (dits aussi AES, ou alkyl sulfates alcoxylés), où le groupe alkyle comporte de préférence au moins 10 atomes de carbone, par exemple entre 10 et 16 atomes de carbone, préférentiellement des alkyl éther sulfates propoxylés et/ou éthoxylés contenant jusqu'à 40 groupements ethoxy et/ou jusqu'à 20 groupements propoxy, par exemple comprenant de 0 à 10 groupements ethoxy et 0 à 10 groupements propoxy (avec au moins un groupe ethoxy ou propoxy présent), comme par exemple un alkyl éther sulfate avec un groupe alkyl en C12-13 comprenant 7 groupements propoxylés ;
  - les tensioactifs anioniques de type alkyl glyceryl éther sulfonates (AGES), où le groupe alkyle comporte de préférence au moins 10 atomes de carbone, par exemple entre 10 et 16 atomes de carbone, ces AGES étant préférentiellement propoxylés et/ou éthoxylés, et contenant par exemple entre 0 et 20 groupements ethoxy et entre 0 et 10 groupements propoxy (avec au moins un groupe ethoxy ou propoxy présent) ;
  - les tensioactifs anioniques de type alkyl éther carboxylates ;
  - les styril phénol alcoxylate sulfates ;
  - les styril phénol alcoxylate phosphates ;
  - les mélanges de ces tensioactifs anioniques.

On utilise selon l'invention un mélange de tensioactifs comprenant :

- au moins un premier tensioactif anionique de type sulfonate, de préférence du type précité ; et
- au moins un deuxième tensioactif anionique choisi parmi les alkyl éther sulfates (AES) ; les alkyl glyceryl éther sulfonates (AGES) ; les alkyl éther carboxylates ; les styril phénol alcoxylate sulfates, les styril phénol alcoxylate phosphates, et mélanges de ceux-ci, le deuxième tensioactif étant de préférence choisi parmi les tensioactifs préférentiels précités.

Par exemple, on peut employer selon l'invention un mélange de tensioactifs de type sulfonate, en particulier du type précité (par exemple un alkyl benzène sulfonate) avec au moins un tensioactif anionique de type alkyl sulfates alcoxylé, notamment du type précité, par exemple un mélange comprenant de 15 à 85% (notamment de 20 à 80%) de sulfonates et de 85 à 15% (respectivement de 80 à 20%) d'alkyl sulfates alcoxylés, en masse par rapport à la masse totale des tensioactifs sulfonates et alkyl sulfates alcoxylés.

Ainsi, typiquement, un mélange comprenant de 40 à 60 % en masse d'au moins un C15-18 alkyl benzène sulfonate (alkyl benzène sulfonate où le groupe alkyle comporte de 15 à 18 atomes de carbones) et de 60 à 40% en masse d'un C12-13 7PO alkyl sulfate (alkyl sulfate avec un groupe alkyl en C12-13 comprenant 7 groupements propoxylés) s'avère intéressant.

Selon un autre mode de réalisation on utilise selon l'invention un mélange de tensioactifs comprenant des tensioactifs de type sulfonate, de préférence du type précité (par exemple un alkyl benzène sulfonate) avec au moins un tensioactif anionique de type AGES, par exemple un mélange comprenant de 15 à 85% (notamment de 20 à 80%) de sulfonates et de 85 à 15% (respectivement de 80 à 20%) d'AGES, en masse par rapport à la masse totale des tensioactifs sulfonates et AGES.

Selon encore un autre mode de réalisation possible, on utilise un mélange de tensioactifs comprenant de 40 à 60 % en masse d'un sulfonate d'oléfine interne et de 60 à 40% en masse d'alkyl éther sulfate.

Alternativement, on peut employer un mélange de tensioactifs comprenant de 40 à 60 % en masse d'alkyl benzène sulfonate et de 60 à 40% en masse d'alkyl glyceryl éther sulfonate.

Selon encore un autre mode de réalisation possible, on utilise un mélange de 40 à 60 % en masse d'un sulfonate d'oléfine interne et de 60 à 40% en masse d'alkyl glyceryl ether sulfonate.

Selon encore un autre mode de réalisation possible, on utilise un mélange de 40 à 60 % en masse d'un sulfonates et disulfonates des composés alpha-sulfocarbonyle et de 60 à 40% en masse d'alkyl glyceryl éther sulfonate.

Selon encore un autre mode de réalisation possible, on utilise un mélange de 40 à 60 % en masse d'un sulfonates et disulfonates des composés alpha-sulfocarbonyle et de 60 à 40% en masse d'alkyl éther sulfate.

Les tensioactifs anioniques précités peuvent optionnellement être employés avec :

- des tensioactifs de type amphotères, préférentiellement de type betaine ou sultaine, préférentiellement encore de type betaine ou sultaine avec des chaînes alkyl comprenant plus de 12 atomes de carbone ; et/ou

- des tensioactifs non ioniques, préférentiellement de type alcools éthoxylés, par exemple de type alcools éthoxylés avec des longueurs de chaînes alkyl comprenant plus de 12 atomes de carbone

- des alkylpolyglucosides (APG).

Par ailleurs, les tensioactifs employés dans une formulation aqueuse selon la présente invention comprennent de préférence des tensioactifs à caractère non labile, à savoir des tensioactifs qui ne sont pas lysés dans les conditions d'utilisation de ladite formulation.

Dans le cadre de la présente invention, en plus des différents avantages précités, les inventeurs ont en outre mis en évidence que, de façon inattendue, les polymères utiles selon l'invention conduisent, en mélange avec des tensioactifs du type précité, à une augmentation particulièrement nette de la viscosité, plus importante que celle observée en employant des polymères non associatifs.

D'autre part, de façon également surprenante, il s'avère que les formulations aqueuses de l'invention conduisent à une diminution de la rétention des tensioactifs au sein des milieu poreux, ce qui en fait des candidats de choix pour l'extraction de pétrole présent dans des formations souterraines lors d'étapes de récupération assistée de pétrole.

L'utilisation des formulations de l'invention pour l'extraction de pétrole constitue, selon un aspect particulier, un autre objet de la présente invention.

Selon encore un autre aspect, la présente invention a pour objet un procédé de récupération assistée du pétrole d'une formation souterraine, dans lequel :

- on injecte dans ladite formation souterraine, par au moins un puits d'injection, une formulation aqueuse selon l'invention et telle que définie dans la revendication 1 ; et

- on récupère, par au moins un puits de production, un fluide véhiculant le pétrole sortant de la formation souterraine.

Différents aspects et modes de réalisation possibles de l'invention vont maintenant être décrits plus en détails.

***Les monomères hydrophiles***

Typiquement, les monomères hydrophiles qui entrent dans la composition des polymères utilisés selon la présente invention peuvent comprendre des monomères choisis parmi :

- les acides carboxyliques éthyléniquement insaturés, les acides sulfoniques et les acides phosphoniques, et/ou leurs dérivés tels que l'acide acrylique (AA), l'acide méthacrylique, l'acide vinylsulfonique, l'acide (meth)allylsulfonique, l'acrylate de sulfoéthyle, le méthacrylate de sulfoéthyle, l'acrylate de sulfopropyle, le méthacrylate de sulfopropyle, l'acide 2-hydroxy-3-acryloyloxypropylsulfonique, l'acide 2-hydroxy-3-methacryloyloxypropylsulfonique, les acides styrenesulfoniques, l'acide 2-acrylamido-2-methylpropanesulfonique (AMPS), l'acide vinylphosphonique, l'acide $\alpha$-methyl vinylphosphonique et l'acide allylphosphonique et leurs sels ; (l'acide acrylique et le 2-acrylamido-2-methylpropanesulfonique s'avèrent notamment intéressant) ;

- les esters d'acides mono- et di-carboxyliques $\alpha,\beta$-éthyléniquement insaturés avec C2-C3-alcanediols, par exemple, l'acrylate de 2-hydroxyethyle, le méthacrylate de 2-hydroxyethyle, l'éthacrylate de 2-hydroxyethyle, l'acrylate de 2-hydroxypropyle, le méthacrylate de 2-hydroxypropyle, l'acrylate de 3-hydroxypropyle, le méthacrylate de 3-hydroxypropyle et les (meth)acrylates ou (meth)acrylamido de polyalkylène glycol;

- les amides d'acides mono-carboxyliques $\alpha,\beta$-éthyléniquement insaturés et leurs dérivés N-alkyle et N,N-dialkyle tels que l'acrylamide, le méthacrylamide, le N-méthyl(meth)acrylamide, le N,N-dimethyl(meth)acrylamide, le morpholinyl(meth)acrylamide, et le metholyl acrylamide (l'acrylamide et le N,N-dimethylacrylamide s'avèrent notamment intéressant) ;

- les N-vinyllactames tels que la N-vinylpyrolidone ou la N-vinylpiperidone ;
- les sulfobétaines ; et
- les mélanges et association de deux ou plusieurs des monomères précités.

Selon un mode de réalisation particulier, ces monomères peuvent notamment comprendre de l'acide acrylique (AA). Selon un mode de réalisation possible, les monomères sont tous des acides acryliques, mais il est également envisageable de mettre en oeuvre à titre de monomères un mélange comprenant, entre autres, de l'acide acrylique, en mélange avec d'autres monomères hydrophiles.

Selon un mode de réalisation préférentiel, les monomères hydrophiles de l'étape (E) comprennent de l'acide (meth)acrylique et/ou des monomères (meth)acrylamido.

Au sens de la présente description, le terme « acide (meth)acrylique » englobe l'acide méthacrylique, l'acide acrylique et leurs mélanges.

De la même façon, au sens de la présente description, le terme « (meth)acrylate » englobe le méthacrylate, l'acrylate et leurs mélanges.

De la même façon, au sens de la présente description, le terme « (meth)acrylamide/(meth)acylamido », englobe le methacrylamide/le methacrylamido, l'acrylamide/l'acrylamido et leurs mélanges. Les monomères contenant des groupes acides peuvent être utilisés pour la polymérisation sous la forme de l'acide libre ou sous la forme partiellement ou totalement neutralisée. Pour la neutralisation, on peut utiliser, par exemple, KOH, NaOH, l'ammoniaque ou autre base.

Selon un autre mode de réalisation particulier, les monomères employés dans le procédé de l'invention sont l'acide acrylique, l'acide méthacrylique, et/ou leurs sels, et/ou leurs mélanges.

Selon un mode de réalisation bien adapté, les monomères mis en oeuvre dans l'étape (E) comprennent (et typiquement sont constitués de) monomères (meth)acrylamide, ou plus généralement des monomères (meth)acrylamido, incluant par exemple :

- les monomères acrylamido suivants :
  - l'acrylamide (AM),
  - l'AMPS
  - le sulfopropyl diméthylammonium propyl acrylamide ;
- les monomères methacrylamido suivants : le sulfopropyl diméthylammonium propyl méthacrylamide (SPP), le sulfohydroxypropyl diméthyl ammonium propyl méthacrylamido.

L'acrylamide (AM) et l'AMPS précités sont notamment bien adaptés comme monomères hydrophiles constitutifs des polymères associatifs employés dans le cadre de la présente invention. Selon un mode de réalisation, le polymère employé selon l'invention comprend au moins un de ces monomères hydrophiles ou un mélange de ces monomères.

Selon un mode de réalisation particulier, les monomères de l'étape (E) sont des acrylamides. Un acrylamide employé dans l'étape (E) est de préférence un acrylamide non stabilisé par du cuivre. En cas de présence de cuivre, il est préférable d'introduire un agent complexant du cuivre tel que l'EDTA, le cas échéant de préférence à hauteur de 20 à 2000 ppm. Lorsqu'on utilise des acrylamides dans l'étape (E), ils peuvent typiquement être employée sous forme de poudre, de solution aqueuse (éventuellement, mais non nécessairement, stabilisée par l'éther monométhylique de l'hydroquinone MEHQ, ou bien par des sels de cuivre (de préférence additionnée d'EDTA le cas échéant)).

Quelle que soit leur nature exacte, les monomères hydrophiles de l'étape (E) peuvent être mis en oeuvre à des concentrations relativement élevées, typiquement à des concentrations qui seraient suffisantes pour assurer la formation du gel si l'étape (E) était conduite en l'absence d'agent de contrôle. Les inventeurs ont maintenant mis en évidence que, de façon surprenante, la polymérisation de l'étape (E) peut, au besoin être conduite dans des conditions qui correspondent à celle de la polymérisation en gel y compris en présence d'agent de contrôle, et ce sans nécessairement conduire à une gélification du milieu réactionnel lors de la polymérisation lorsqu'elle est effectuée en présence d'un agent de contrôle.

Typiquement, la concentration initiale en monomères dans le milieu réactionnel de l'étape (E) peut aller jusqu'à 40% en masse, voire jusqu'à 50% en masse, cette concentration restant en général inférieure à 30% en masse par rapport à la masse totale du milieu réactionnel. Par exemple, la concentration initiale en monomères dans le milieu réactionnel de l'étape (E) est comprise entre 0,5 % et 35%, notamment entre 1 et 30% en masse par rapport à la masse

totale du milieu réactionnel.

Selon un mode de réalisation spécifique, les monomères hydrophiles employés dans l'étape (E) sont des macromonomères thermosensibles, insolubles dans l'eau au-delà d'une certaine température (point de trouble ou "cloud point" en anglais), mais solubles à plus faible température, l'étape (E) étant conduite (au moins pour partie) à une température inférieure à la température du point de trouble. Les macromonomères de ce type présentent typiquement une fonction polymérisable de type (meth)acrylamido ou (meth)acrylate, et une chaîne latérale composée d'enchaînements oxyde d'éthylène ou oxyde de propylène (statistique ou à blocs), ou bien à base de N-isopropylacrylamide, ou de N-vinylcaprolactame. Ce mode de réalisation donne notamment accès à la préparation de polymères présentant des propriétés thermo épaississantes, utilisables par exemple dans l'industrie pétrolière.

De préférence, dans l'étape (E), tous les monomères hydrophiles sont dissous et/ou dispersés au sein du milieu aqueux (M).

***Les monomères hydrophobes***

Ces monomères, mis en oeuvre dans l'étape (E) sous la forme d'une solution micellaire, à savoir contenant, à l'état dispersé au sein du milieu (M), des micelles comprenant ces monomères hydrophobes. Sous réserve qu'ils puissent être intégrés dans des micelles de ce type, tout monomère de nature hydrophobe peut être envisagé dans l'étape (E).

A titre d'exemple non limitatif de monomère hydrophobe utilisable selon l'invention, on peut notamment citer :

- les monomères vinylaromatiques tels que le styrène, l'alpha methylstyrène, le parachlorométhylstyrène, le vinyltoluène, le 2-methylstyrene, le 4-methylstyrene, le 2-(n-butyl)styrène, le tertiobutyl styrène , ou le 4-(n-decyl)styrène ;

- les composés vinyliques halogénés, tels que les halogénures de vinyle ou de vinylidène, comme des chlorures ou fluorure de vinyle ou de vinylidène, répondant à la formule $R_bR_cC=CX^1X^2$,

  où : $X^1$ = F ou Cl
  $X^2$ = H, F ou Cl
  chacun de $R_b$ et $R_c$ représente, indépendamment :

  - H, Cl, F ; ou
  - un groupe alkyle, de préférence chloré et/ou fluoré, plus avantageusement perchloré ou perfluoré ;

- les esters d'acide mono-, di-carboxylique $\alpha,\beta$ éthyléniquement insaturés avec C4-C30-alcanols, par exemple, le (meth)acrylate de n-butyle, le (meth)acrylate de sec-butyle, le (meth)acrylate de tert-butyle, l'ethacrylate de tert-butyle, le (meth)acrylate de n-hexyle, le (meth)acrylate de n-heptyle, le (meth)acrylate de n-octyle, le (meth)acrylate de 1,1,3,3-tetramethylbutyle, le (meth)acrylate d'ethylhexyle, le (meth)acrylate de n-nonyle, le (meth)acrylate de n-decyle, le (meth)acrylate de n-undecyle, le (meth)acrylate de tridecyle, le (meth)acrylate de myristyle, le (meth)acrylate de pentadecyle, le (meth)acrylate de palmityle, le (meth)acrylate de heptadecyle, le (meth)acrylate de nonadecyle, le (meth)acrylate d'arachinyle, le (meth)acrylate de behenyle, le (meth)acrylate de lignoceryle, le (meth)acrylate de cerotinyle, le (meth)acrylate de melissinyle, le (meth)acrylate de palmitoleoyle, le (meth)acrylate d'oleyle, le (meth)acrylate de linolyle, le (meth)acrylate de linolenyle, le (meth)acrylate de stearyle, le (meth)acrylate de lauryle et leurs mélanges ;

- les esters d'alcool de vinyle ou d'allyle avec les acides monocarboxyliques en C1-C30, par exemple, , le vinyl acétate, le vinyl propionate, le vinyl butyrate, le vinyl laurate, le vinyl stéarate, le vinyl propionate, le vinyl versatate et leurs mélanges ;

- les esters d'acides mono- et di-carboxyliques $\alpha,\beta$ éthyléniquement insaturés avec l'alcanediols en C4-C30, par exemple, l'acrylate de 3-hydroxybutyle, le méthacrylate de 3-hydroxybutyle, l'acrylate de 4-hydroxybutyle, le méthacrylate de 4-hydroxybutyle, l'acrylate de 6-hydroxyhexyle, le méthacrylate de 6-hydroxyhexyle, l'acrylate 3-hydroxy-2-ethylhexyle et le méthacrylate de 3-hydroxy-2-ethylhexyle ;

- les amides primaires d'acides mono- et di-carboxyliques $\alpha,\beta$ éthyléniquement insaturés et les dérivés de N-alkyle et N,N-dialkyle, tels que le N-(n-butyl)(meth)acrylamide, le N-(tert-butyl)(meth)acrylamide, le N-(n-octyl)(meth)acrylamide, le N-(1,1,3,3-tetramethylbutyl)(meth)acrylamide, le N-ethylhexyl(meth)acrylamide, le N-(n-nonyl)(meth)acrylamide, le N-(n-decyl)(meth)acrylamide, le N-(n-undecyl)(meth)acrylamide, le N-tridecyl(meth)acrylamide, le N-myristyl(meth)acrylamide, le N-pentadecyl(meth)acrylamide, le N-palmityl(meth)acrylamide, le N-heptadecyl(meth)acrylamide, le N-nonadecyl(meth)acrylamide, le N-arachinyl(meth)acrylamide, le N-behenyl(meth)acrylamide, le N-lignoceryl(meth)acrylamide, le N-cerotinyl(meth)acrylamide, le N-melissinyl(meth)acrylamide, le N-palmitoleoyl(meth)acrylamide, le N-oleyl(meth)acrylamide, le N-linolyl(meth)acrylamide, le N-linolenyl(meth)acrylamide, le N-stearyl(meth)acrylamide et le N-lauryl(meth)acrylamide ; ou le dihexyl acrylamide

- les monooléfines en C2-C8 et les hydrocarbures non aromatiques comprenant au moins une double liaison, par exemple, l'éthylène, le propylène, l'isobutylène, l'isoprène, le butadiène.

Selon un mode de réalisation préférentiel, les monomères hydrophobes employés selon l'invention, peuvent être choisis parmi :

- les esters alpha-bêta insaturés d'alkyle en C4-C30 alkyle, de préférence d'alkyle en C6-C22, en particulier les acrylates et méthacrylate d'alkyle, comme les acrylates et méthacrylate de butyle, 2-étylhexyl, isooctyle, lauryle, isodécyle ou stéaryle ou oléyl (le méthacrylate de lauryle en particulier s'avère notamment intéressant) ;

- les amides alpha-bêta insaturés d'alkyle en C4-C30 alkyle, de préférence d'alkyle en C6-C22, en particulier les acrylamide et méthacrylamide d'alkyle, comme les méthyle, ethyle, butyle, 2-étylhexyle, isoactyle, lauryle, isodécyle ou stéaryle acrylamide et methacrylamide (le lauryle methacrylamide en particulier s'avère notamment intéressant) et les N,N- akyl (methacrylamides) bis hexyl acrylamide;

- les esters de vinyle ou d'alcool d'acide carboxyliques saturés tels que les acétate, propionate, versatate, ou stéarate de vinyle ;

- les mélanges et association de deux ou plusieurs des monomères précités.

Les monomères méthacrylate de lauryle (LMA) et lauryle methacrylamide (LMAM) sont notamment bien adaptés comme monomères hydrophobes constitutifs des polymères associatifs employés dans le cadre de la présente invention. Selon un mode de réalisation, le polymère employé selon l'invention comprend au moins un de ces monomères hydrophobes.

De préférence, les micelles de la solution micellaire de l'étape (E) ne contiennent pas de monomères à caractère hydrophile ou hydrodispersdible. Par ailleurs, de préférence, tous les monomères hydrophobes employés dans l'étape (E) sont renfermés dans des micelles de la solution micellaire.

***L'agent de contrôle de polymérisation radicalaire***

L'agent de contrôle qui peut être avantageusement mis en oeuvre dans l'étape (E) ou, le cas échéant, dans l'étape ($E^0$) selon l'invention est de préférence un composé porteur d'un groupe thiocarbonylthio -S(C=S)-. Selon un mode de réalisation particulier, l'agent de contrôle peut être porteur de plusieurs groupes thiocarbonylthio. Il peut éventuellement s'agir d'une chaîne polymère porteuse d'un tel groupe.

Ainsi, cet agent de contrôle peut par exemple répondre à la formule (A) ci-dessous :

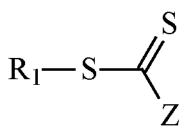

(A)

dans laquelle :

- Z représente :

. un atome d'hydrogène,
. un atome de Chlore,
. un radical alkyl éventuellement substitué, aryl éventuellement substitué,
. un hétérocycle éventuellement substitué,
. un radical alkylthio éventuellement substitué,
. un radical arylthio éventuellement substitué,

. un radical alkoxy éventuellement substitué,
. un radical aryloxy éventuellement substitué,
. un radical amino éventuellement substitué,
. un radical hydrazine éventuellement substitué,
. un radical alkoxycarbonyl éventuellement substitué,
. un radical aryloxycarbonyl éventuellement substitué,
. un radical carboxy, acyloxy éventuellement substitué,
. un radical aroyloxy éventuellement substitué,
. un radical carbamoyle éventuellement substitué,
. un radical cyano,
. un radical dialkyl- ou diaryl-phosphonato,
. un radical dialkyl-phosphinato ou diaryl-phosphinato, ou
. une chaîne polymère,
et

- $R_1$ représente :

  - un groupe alkyle, acyle, aryle, aralkyle, alcène ou alcyne éventuellement substitué,
  - un cycle carboné ou un hétérocycle, saturé ou non, aromatique éventuellement substitué, ou
  - une chaîne polymère, de préférence hydrophile ou hydrodispersible lorsque l'agent est mis en oeuvre dans l'étape (E).

Les groupes $R_1$ ou Z, lorsqu'ils sont substitués, peuvent l'être par des groupes phényles éventuellement substitués, des groupes aromatiques éventuellement substitués, des cycles carbonés saturés ou non, des hétérocycles saturé ou non, ou des groupes : alkoxycarbonyle ou aryloxycarbonyle (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, perfluoroalkyle $C_nF_{2n+1}$, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (PEO, POP), les substituants cationiques (sels d'ammonium quaternaires), R représentant un groupe alkyle ou aryle, ou une chaîne polymère.

Pour les agents de contrôle de formule (A) mis en oeuvre dans l'étape (E), on préfère en général que le groupe R1 soit de nature hydrophile. Avantageusement, il s'agit d'une chaîne polymère hydrosoluble ou hydrodispersible.

Le groupe R1 peut alternativement être amphiphile, à savoir présenter à la fois un caractère hydrophile et lipophile. Il est préférable que R1 ne soit pas hydrophobe.

Concernant les agents de contrôle de formule (A) mis en oeuvre dans l'étape ($E^0$), $R_1$ peut typiquement être un groupe alkyle substitué ou non, de préférence substitué. Un agent de contrôle de formule (A) mis en oeuvre dans l'étape ($E^0$) peut néanmoins comprendre d'autres types de groupes $R_1$, notamment un cycle ou une chaîne polymère

Les groupes alkyle, acyle, aryle, aralkyle ou alcyne éventuellement substitués présentent généralement 1 à 20 atomes de carbone, de préférence 1 à 12, et plus préférentiellement 1 à 9 atomes de carbone. Ils peuvent être linéaires ou ramifiés. Ils peuvent être également substitués par des atomes d'oxygène, sous forme notamment d'esters, des atomes de soufre ou d'azote.

Parmi les radicaux alkyle, on peut notamment citer le radical méthyle, éthyle, propyle, butyle, pentyle, isopropyle, tert-butyle, pentyle, hexyle, octyle, decyle ou dodécyle.

Les groupes alcynes sont des radicaux généralement de 2 à 10 atomes de carbone, ils présentent au moins une insaturation acétylénique, tel que le radical acétylenyle.

Le groupe acyle est un radical présentant généralement de 1 à 20 atomes de carbone avec un groupement carbonyle.

Parmi les radicaux aryle, on peut notamment citer le radical phényle, éventuellement substitué notamment par une fonction nitro ou hydroxyle.

Parmi les radicaux aralkyle, on peut notamment citer le radical benzyle ou phénéthyle, éventuellement substitué notamment par une fonction nitro ou hydroxyle.

Lorsque $R_1$ ou Z est une chaîne polymère, cette chaîne polymère peut être issue d'une polymérisation radicalaire ou ionique ou issue d'une polycondensation.

Avantageusement, on utilise comme agent de contrôle pour l'étape (E), ainsi que pour l'étape ($E^0$) le cas échéant, des composés porteurs d'une fonction xanthate -S(C=S)O-, trithiocarbonate, des dithiocarbamate, ou dithiocarbazate, par exemple porteurs d'une fonction O-ethyl xanthate de formule $-S(C=S)OCH_2CH_3$ .

Lorsque l'étape ($E^0$) est conduite, il est notamment intéressant d'employer à titre d'agents de contrôle dans

cette étape un composé choisi parmi les xanthates, les trithiocarbonates, les dithiocarbamates, ou les dithiocarbazates. Les xanthates se révèlent tout particulièrement intéressants, notamment ceux porteur d'une fonction O-ethyl xanthate $-S(C=S)OCH_2CH_3$, comme le O-ethyl-S-(1-methoxycarbonyl ethyl) xanthate $(CH_3CH(CO_2CH_3))S(C=S)OEt$. Un autre agent de contrôle possible dans l'étape ($E^0$) est le dibenzyltrithiocarbonate de formule $PhCH_2S(C=S)SCH_2Ph$ (où Ph=phényle).

Les pré-polymères vivants obtenus dans l'étape ($E^0$) en utilisant les agents de contrôle précités s'avèrent particulièrement intéressants pour la conduite de l'étape (E).

*Amorçage et conduite des polymérisations radicalaires des étapes (E) et ($E^0$)*

Lorsqu'il est mis en oeuvre dans l'étape (E) l'amorceur de la polymérisation radicalaire est de préférence hydrosoluble ou hydrodispersible. Hormis cette condition préférentielle, on peut employer dans l'étape (E) et l'étape ($E^0$) du procédé de l'invention tout amorceur de polymérisation radicalaire (source de radicaux libres) connu en soi et adapté aux conditions choisies pour ces étapes.

Ainsi, l'amorceur (initiateur) de polymérisation radicalaire employé selon l'invention peut par exemple être choisi parmi les initiateurs classiquement utilisés en polymérisation radicalaire. Il peut s'agir par exemple d'un des initiateurs suivants :

- les peroxydes d'hydrogène tels que : l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle,

Les persulfates comme le persulfate de potassium, le persulfate d'ammonium, le persulfate de sodium,

- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,

- les systèmes redox comportant des combinaisons telles que :

  - les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs, et

  - les persulfates, perborate ou perchlorate de métaux alcalins ou d'ammonium en association avec un bisulfite de métal alcalin, tel que le métabisulfite de sodium, ou le formaldéhyde sulfoxylate de sodium et des sucres réducteurs.

Typiquement, la quantité d'initiateur à utiliser est déterminée de préférence de manière à ce que la quantité de radicaux générés soit d'au plus 50 % en mole, de préférence d'au plus 20% en mole, par rapport à la quantité d'agent de contrôle ou de transfert.

Tout particulièrement dans l'étape (E), il s'avère généralement intéressant d'utiliser un amorceur radicalaire de type redox, qui présente, entre autres, l'avantage de ne pas nécessiter un chauffage du milieu réactionnel (pas d'amorçage thermique) et dont les inventeurs ont en outre maintenant découvert qu'il se révèle adapté à la polymérisation micellaire de l'étape (E).

Ainsi, l'amorceur de polymérisation radicalaire employé l'étape (E) peut typiquement être un amorceur redox, typiquement ne nécessitant pas de chauffage pour leur amorçage thermique. Il s'agit typiquement d'un mélange d'au moins un agent oxydant avec au moins un agent réducteur.

L'agent oxydant présent dans ce système redox est de préférence un agent hydrosoluble. Cet agent oxydant peut par exemple être choisi parmi les peroxydes, tels que

le peroxyde d'hydrogène, l'hydroperoxyde de butyle tertiaire ;

les persulfates de sodium, le persulfate de potassium, le persulfate d'ammonium, ou bien encore

le bromate de potassium ou de sodium.

L'agent réducteur présent dans le système redox est également, de préférence, un agent hydrosoluble. Cet agent réducteur peut typiquement être choisi parmi le formaldéhyde sulfoxylate de sodium (notamment sous sa forme de dihydrate, connue sous le nom de Rongalit ou sous la forme d'un anhydride), l'acide ascorbique, l'acide érythorbique, les sulfites, bisulfites ou métasulfites (sulfites, bisulfites ou métasulfites de métaux alcalins en particulier), les nitrilotrispropionamides, et les amines et ethanolamines tertiaires (de préférence hydrosolubles).

Des systèmes redox possibles comportent des combinaisons telles que :

- les mélanges de persulfates hydrosolubles avec des amines tertiaires hydrosolubles,
- les mélanges de bromates hydrosolubles (bromate de métaux alcalins par exemple) avec des sulfites hydrosolubles (sulfites de métaux alcalins par exemple),
- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
- les persulfates, perborate ou perchlorate de métaux alcalins ou d'ammonium en association avec un bisulfite de métal alcalin, tel que le métabisulfite de sodium, et des sucres réducteurs.

Un système redox intéressant comprend (et de préférence consiste en) l'association de persulfate d'ammonium ou sodium ou potassium et de formaldéhyde sulfoxylate de sodium ou de metabisulfite de sodium.

De façon générale, et en particulier dans le cas de l'utilisation d'un système redox du type persulfate /formaldéhyde sulfoxylate de sodium, il s'avère préférable que le milieu réactionnel de l'étape (E) soit exempt de cuivre. En cas de présence de cuivre, il est en général souhaitable d'ajouter un complexant du cuivre, tel que de l'EDTA, en une quantité propre à masquer sa présence. La présence de complexant tels que l'EDTA est, plus généralement utile pour séquestrer les cations métalliques indésirables et il est donc intéressant d'utilisant ce type de complexant lorsque le milieu de synthèse est susceptible de contenir de tels cations métalliques.

Quelle que soit la nature de l'amorceur employé, la polymérisation radicalaire de l'étape ($E^0$) peut être effectuées sous toute forme physique appropriée, par exemple en solution dans l'eau ou dans un solvant par exemple un alcool ou le THF, en émulsion dans l'eau (procédé dit "latex"), en masse, le cas échéant en contrôlant la température et/ou le pH afin de rendre des espèces liquides et/ou solubles ou insolubles.

A l'issue de l'étape (E), lors la mise en oeuvre spécifique d'un agent de contrôle, on obtient des polymères fonctionnalisés par des groupes de transfert (polymères vivants). Ce caractère vivant permet si on le souhaite, d'employer ces polymères dans une réaction de polymérisation ultérieure, selon une technique bien connue en soi. Alternativement, au besoin, il est possible de désactiver ou de détruire les groupes de transfert, par exemple par hydrolyse, ozonolyse, l'oxydation ou réaction avec des amines, selon des moyens connus en soi. Ainsi, selon un mode de réalisation particulier, le procédé de l'invention peut comprendre, après l'étape (E), une étape (E1) d'hydrolyse, d'ozonolyse ou de réaction avec des amines, propre à désactiver et/ou détruire tout ou partie des groupes de transfert présents sur le polymère préparé dans l'étape (E).

***Agents tensioactifs utilisables pour former des micelles dans l'étape (E)***

Pour réaliser la solution micellaire des monomères hydrophobes employés dans l'étape (E), on peut employer tout tensioactif adapté (étant entendu qu'un tel agent tensioactif n'est pas forcément nécessaire lorsqu'on emploie des monomères automicellisables). Ces agents tensioactifs utilisés pour former les micelles dans l'étape (E) peuvent constituer une partie des tensioactifs présents dans la formulation aqueuse de l'invention. Ainsi, une formulation selon l'invention peut comprendre en mélange des agents tensioactifs employés lors de la mise en oeuvre de l'étape (E) et des tensioactifs additionnels. On peut aussi faire le choix, selon un mode de réalisation particulier, de retirer tout ou partie des agents tensioactifs employés dans l'étape (E) suite à la préparation du polymère de façon à ce que tout ou partie des agents tensioactifs employés pour former les micelles dans l'étape (E) n'est pas présent dans la formulation selon l'invention.

A titre non limitatif, pour former des micelles dans l'étape (E), on peut par exemple, employer des agents tensioactifs choisis dans la liste suivante :

- des agents tensioactifs anioniques qui peuvent être choisis parmi:

  les alkylesters sulfonates, par exemple de formule R-CH($SO_3$M)-$CH_2$COOR', ou les alkylesters sulfates, par exemple de formule R-CH($OSO_3$M)-$CH_2$COOR', où R représente un radical alkyle en $C_8$-$C_{20}$, de préférence en $C_{10}$-$C_{16}$, R' un radical alkyle en $C_1$-$C_6$, de préférence en $C_1$-$C_3$ et M un cation alcalino-terreux, par exemple sodium, ou le cation ammonium. On peut citer tout particulièrement les méthyl ester sulfonates dont le radical R est en $C_{14}$-$C_{16}$;
  les alkylbenzènesulfonates, plus particulièrement en $C_9$-$C_{20}$, les alkylsulfonates primaires ou secondaires, notamment en $C_8$-$C_{22}$, les alkylglycérol sulfonates ;
  les alkylsulfates par exemple de formule $ROSO_3M$, où R représente un radical alkyle ou hydroxyalkyle en $C_{10}$-$C_{24}$, de préférence en $C_{12}$-$C_{20}$ ; M un cation de même définition que ci-dessus ;
  les alkyléthersulfates par exemple de formule $RO(OA)_nSO_3M$ où R représente un radical alkyle ou hydroxyalkyle en $C_{10}$-$C_{24}$, de préférence en $C_{12}$-$C_{20}$ ; OA représentant un groupement éthoxylé et/ou propoxylé ; M représentant un cation de même définition que ci-dessus, n variant généralement de 1 à 4, comme par exemple le lauryléthersulfate avec n = 2 ;
  les alkylamides sulfates, par exemple de formule RCONHR'$OSO_3$M où R représente un radical alkyle en $C_2$-$C_{22}$, de préférence en $C_6$-$C_{20}$, R' un radical alkyle en $C_2$-$C_3$, M représentant un cation de même définition que ci-dessus, ainsi que leurs dérivés polyalcoxylés (éthoxylés et/ou propoxylés) (alkylamidoether sulfates ;
  les sels d'acides gras saturés ou insaturés, par exemple comme ceux en $C_8$-$C_{24}$, de préférence en $C_{14}$-$C_{20}$ et d'un cation alcalino-terreux, les N-acyl N-alkyltaurates, les alkyliséthionates, les alkylsuccinamates et alkylsulfo succinates, les alkyl glutamates, les monoesters ou diesters de sulfosuccinates, les N-acyl sarcosinates, les polyéthoxycarboxylates ;
  les mono et di esters phosphates, par exemple de formule suivante : $(RO)_x$-P(=O)$(OM)_x$ ou R représente un radical alkyle, alkylaryle, arylalkyle, aryle, éventuellement polyalcoxylés, x et x' étant égaux à 1 ou 2, à la condition que la somme de x et x' soit égale à 3, M représentant un cation alcalino-terreux ;

- des agents tensioactifs non ioniques qui peuvent être choisis parmi:

  les alcools gras alcoxylés ; par exemple les laureth-2, laureth-4, laureth-7, oleth-20, les triglycérides alcoxylés, les acides gras alcoxylés, les esters de sorbitan alcoxylés, les amines grasses alcoxylées, les di(phényl-1 éthyl) phénols alcoxylés, les tri(phényl-1 éthyl) phénols alcoxylés, les alkyls phénols alcoxylés, les produits résultant de la condensation de l'oxyde d'éthylène avec un composé hydrophobe résultant de la condensation de l'oxyde de propylène avec le propylène glycol, tels les Pluronic commercialisés par BASF ; les produits résultant de la condensation de l'oxyde d'éthylène le composé résultant de la condensation de l'oxyde de propylène avec l'éthylènediamine, tels les Tetronic commercialisés par BASF ; les alkylpolyglycosides comme ceux décrits dans US 4565647 ou les alkylglucosides;
  les amides d'acides gras par exemple en $C_8$-$C_{20}$, notamment les monoalkanolamides d'acides gras, par exemple la cocamide MEA ou la cocamide MIPA ;

- des agents tensioactifs amphotères (amphotères vrais comprenant un groupe ioniques et un groupe potentiellement ionique de charge opposée, ou zwitterioniques comprenant simultanément deux charges opposées) qui peuvent être:

  les bétaïnes de manière générale, notamment carboxybétaïnes de par exemple la lauryl bétaïne (Mirataine BB de la société Rhodia) ou l'octylbétaïne ou la cocobétaïne (Mirataine BB-FLA de Rhodia); les amidoalkylbétaïnes, comme la cocamidopropyl bétaïne (CAPB) (Mirataine BDJ de la société Rhodia ou Mirataine BET C-30 de Rhodia) ;
  les sulfo-bétaïnes ou sultaines comme la cocamidopropyl hydroxy sultaïne (Mirataine CBS de la société Rhodia) ;
  les alkylamphoacétates et alkylamphodiacétates, comme par exemple comprenant une chaîne coco, lauryle (Miranol C2M Conc NP, C32, L32 notamment, de la société Rhodia) ;
  les alkylamphopropionates ou les alkylamphodipropionates, (Miranol C2M SF) ;
  les alkyl amphohydroxypropyl sultaïnes (Miranol CS),
  les oxydes d'alkyl amines, par exemple lauramine oxide (INCI) ;

- des mélanges compatibles des tensioactifs précités.

Les tensioactifs employés selon la présente invention peuvent être (seuls ou combinaison avec ceux précités) des copolymères à blocs contenant au moins un bloc hydrophile et au moins un bloc hydrophobe distinct du bloc hydrophile, avantageusement obtenus selon un procédé de polymérisation où :

($a_0$) on met en présence au sein d'une phase aqueuse au moins un monomère hydrophile (respectivement hydrophobe), au moins une source de radicaux libres et au moins un agent de contrôle de polymérisation radicalaire du type -S(C=S)- ;

($a_1$) on met en contact le polymère obtenu à l'issu de l'étape ($a_0$) avec au moins un monomère hydrophobe (respectivement hydrophile) distinct du monomère employé dans l'étape ($a_0$) et au moins une source de radicaux libres;

ce par quoi on obtient un copolymère dibloc.

Des polymères du type tribloc, ou comprenant davantage des blocs, peuvent éventuellement être obtenus en mettant en oeuvre après l'étape ($a_1$), une étape ($a_2$) dans laquelle, on met en contact le polymère obtenu à l'issu de l'étape (a1) avec au moins un monomère distinct du monomère employé dans l'étape ($a_1$) et au moins une source de radicaux libres ; et plus généralement, en mettant en oeuvre (n+1) étapes du type des étapes ($a_1$) et ($a_2$) précitées et n est un nombre entier allant typiquement de 1 à 3, où dans chaque étape ($a_n$), avec $n \geq 1$ : on met en contact le polymère obtenu à l'issu de l'étape ($a_{n-1}$) avec au moins un monomère distinct du monomère employé dans l'étape ($a_{n-1}$) et au moins une source de radicaux libres. On peut par exemple employer selon l'invention des copolymères du type décrits dans WO03068827, WO03068848 et WO2005/021612.

**Polymères synthétisés selon l'étape (E)**

Dans les conditions de l'étape (E), il s'avère possible de contrôler la masse molaire moyenne en nombre des polymères dans une large gamme, allant de 1 000 g/mol à plusieurs millions de g/mol.

Dans le cadre de la présente invention, on utilise de préférence des polymères ayant une masse moléculaire en nombre Mn comprise entre 500 000 et 12 000 000 g/mol, cette masse étant avantageusement entre 1 000 000 g/mol et 10 000 000 g/mol et notamment entre 1 500 000 et 5 000 000, par exemple de l'ordre de 2 000 000 g/mol.

Quelle que soit la taille des polymères synthétisés dans l'étape (E), ces polymères présentent en outre une microstructure très contrôlée, et ce en particulier lorsqu'un agent de contrôle est employé dans l'étape (E), avec des chaînes sensiblement toutes similaires, comprenant des blocs hydrophobes répartis sensiblement de la même manière d'une chaîne polymère à une autre. Cette homogénéité de la distribution des blocs hydrophobes d'une chaîne à l'autre permet d'obtenir une population de polymère présentant tous des propriétés similaires, ce qui permet de fournir des compositions ayant des propriétés parfaitement ciblées et reproductibles.

**Formulations de l'invention et utilisation en EOR**

Dans les formulations aqueuses de la présente invention, qui comprennent en association au moins un polymère du type précité, tel qu'obtenu à l'issu de l'étape (E), et au moins un tensioactif du type précité (ou le plus souvent un mélange de tensioactifs), la concentration en polymère tel qu'obtenu selon l'étape (E) est en général comprise entre 0,5 et 3 g/L, par exemple entre 1 et 2,5 g/L.

La concentration en tensioactifs (comprenant des tensioactifs anioniques de type précité, incluant des sulfonates) est quant à elle de préférence comprise entre 0,5 et 10 g/L, par exemple entre 1 et 5 g/L. A noter qu'au sens de la présente description, la notion de « tensioactifs contenus dans la formulation » exclut les polymères tels qu'issus de l'étape (E) : bien qu'ils présentent un caractère amphiphile, ces polymères ne sont pas à considérer comme des tensioactifs au sens de la présente invention.

Par ailleurs, dans une formulation aqueuse selon l'invention, le rapport massique polymères/tensioactifs, calculé par le rapport de la masse totale de polymères de type obtenus selon l'étape (E) sur la masse totale des tensioactifs, est en général compris entre 0,005 et 2, par exemple entre 0,006 et 0,5.

Par ailleurs, une formulation selon l'invention peut être employée dans des conditions sévères de salinité et/ou de température.

Ainsi, une formulation selon l'invention peut être employée dans des conditions où l'association des polymères et des tensioactifs qu'elle comprend est mis en oeuvre dans un milieu comprenant des sels jusqu'à une teneur totale en sels dissous (dite TDS pour l'anglais « *Total Dissolved Salts* ») de 150 g/L, par exemple à une teneur supérieure ou égale à 10 g/L, voire à 20 g/L. Notamment à des salinités élevées, et comme cela est illustré dans les exemples illustratifs donnés ci-après, un polymère tel qu'employé selon l'invention maintient une compatibilité acceptable avec les tensioactifs, là où les polymères usuels tendent en général à se déstabiliser, souvent avec séparation de phase. A des salinités très élevées, les formulations selon l'invention tendent au contraire à se structurer sous forme d'un gel, ce qui est un effet intéressant qui inhibe les phénomènes de séparation de phase (démixtion, crémage...) en piégeant les espèces présentes dans le gel.

Par ailleurs une formulation selon l'invention peut être utilisée sur une large gamme de température, allant jusqu'à 120°C, voire au-delà dans certains cas. De façon plus générale, une composition selon l'invention peut ainsi par exemple être employée à une température comprise entre 10 et 120°C, et notamment au-dessus de 50°C, voire

au-dessus de 70°C, et même au-dessus de 100°C.

Les exemples donnés ci-après illustre des modes de réalisation non limitatifs de l'invention et certain de leurs avantages.

## EXEMPLES

### Exemple 1 :

**synthèse d'un polymère associatif P1 utile selon l'invention**

Un premier polymère P1 (poly AM/AMPS/LMAM/Xa) a été préparé dans les conditions suivantes :

Dans une bouteille en verre de 500ml on a introduit, à température ambiante (20°C), 44,0g de Sodium Dodecyl Sulfate (SDS) ; 3,12g de LMAM et 172,88g d'eau déminéralisée. On a laissé agiter à l'aide d'un barreau aimanté dans un bain marie à 50°C, pendant 60 min jusqu'à ce que le LMAM soit parfaitement solubilisé. (Solution A1)

Dans une bouteille en verre de 2000mL, on a pesé 595,0g d'Acrylamide en solution à 50% massique dans l'eau, 479,7g d'AMPS(Na) en solution à 50% massique dans l'eau, 528,74g d'eau déminéralisée et 186,9g de la Solution A1 précédemment préparée. (Solution B1)

Après agitation au barreau aimanté de la solution B1 on a mesuré le pH à l'aide d'un pH mètre calibré, le pH de la solution est de 7,2, on l'a ajusté à 6,0 à l'aide d'une solution d'acide sulfurique à 10% massique dans l'eau.

On a alors ajouté 5,588g d'une solution de Rhodixan A1 à 1% massique dans l'éthanol.

On a chargé cette nouvelle solution dans un Dewar (3000 ml) équipé d'un couvercle qui permet une étanchéité d'atmosphère, une ancre d'agitation, une sonde de température et une arrivée d'azote, à température ambiante (20°C).

Le mélange a été dégazé par bullage d'azote pendant 60 minutes. On a ajouté au milieu, en une fois, 1,8g du formaldéhyde sulfoxylate de sodium, sous forme de solution aqueuse à 5% en masse et 2,25g de persulfate de potassium (solution aqueuse à 4% en masse). Le mélange a été préalablement dégazé par bullage d'azote pendant 15 minutes.
On a alors laissé la réaction de polymérisation se dérouler sous agitation pendant 16 heures, ce par quoi on a obtenu le polymère P1.

### Exemple 2 :

**synthèse d'un polymère associatif P2 utile selon l'invention**

Un deuxième polymère P2 (poly AM/AMPS/LMAM/Xa) a été préparé dans les conditions suivantes :

Dans une bouteille en verre de 2000ml on a introduit, à température ambiante (20°C), 45,1g de Stepanol WA extra (SDS) ; 2,21g de LMAM et 17,62g d'eau déminéralisée. On a laissé agiter à l'aide d'un barreau aimanté dans un bain marie à 50°C, pendant 60 min jusqu'à ce que le LMAM soit parfaitement solubilisé. (Solution A2)

Dans cette même bouteille en verre de 2000mL contenant la solution A2, on a pesé 495,8g d'Acrylamide en solution à 50% massique dans l'eau, 399,8g d'AMPS en solution à 50% massique dans l'eau, 822,3g d'eau déminéralisée. (Solution B2)

Après agitation au barreau aimanté de la solution B2 on a mesuré le pH à l'aide d'un pH mètre calibré, le pH de la solution est de 7,9, on l'ajuste à 6.0 à l'aide d'une solution d'acide sulfurique à 10% massique dans l'eau.

On a alors ajouté 4,657g d'une solution de Rhodixan A1 à 1% massique dans l'éthanol. On charge cette nouvelle solution dans un Dewar (3000 ml) équipé d'un couvercle qui permet une étanchéité d'atmosphère, une ancre d'agitation, une sonde de température et une arrivée d'azote, à température ambiante (20°C).

Le mélange a été dégazé par bullage d'azote pendant 60 minutes. On a ajouté au milieu, en une fois, 8,1g de 2,2-Azobis(2-methylpropionamidine) dihydrochlorure (V50) sous forme de solution aqueuse à 10% en masse, 1,8g de formaldéhyde sulfoxylate de sodium, sous forme de solution aqueuse à 10% en masse et 2,7g de persulfate de sodium (solution aqueuse à 10% en masse). Le mélange a été préalablement dégazé par bullage d'azote pendant 15 minutes.

On a alors laissé la réaction de polymérisation se dérouler sous agitation pendant 16 heures, ce par quoi on a obtenu le polymère P2.

**Exemple 3** :

**Compatibilité des polymères avec des tensioactifs**

On a réalisé des solutions aqueuses comprenant, en mélange :

- un polymère choisi parmi le polymère P1 de l'exemple 1 ou le polymère P2 de l'exemple 2 présent à hauteur de **1,5 g/L** dans la solution ;
- des tensioactifs, à savoir :
  - un alkyl benzène sulfonate **ABS** (sous forme d'un sel sodique obtenu par neutralisation (pH 9) de XOF 25A commercialisé par Huntsman - chaîne alkyle en C15-18) présent à hauteur de 3 g/L dans la solution ;
  - un **AGES** (obtenu par propoxylation, puis éthoxylation puis sulfonation de l'EXXAL C13 commercialisé par ExxonMobil - 10 propoxy et 6 ethoxy - chaîne alcool en C13) présent à hauteur de 5 g/L dans la solution ;
- des sels (à savoir un mélange de sels comprenant, sur la base de la masse totale des sels 78,2% en masse de NaCl, 1,2% en masse de KCl, 4,2% en masse de $CaCl_2$, 9,4% en masse de $MgCl_2$, 7% en masse de $Na_2SO_4$) présents à différentes concentrations dans la solution (TDS)

A titre de comparaison, on a réalisé :

- des solutions aqueuses identiques aux précédentes mais ne comprenant pas du tout de polymère (solutions dites « **TEMOIN** ») ; et
- des solutions aqueuses identiques aux précédentes mais contenant, à la place d'un polymère selon l'invention, un polymère **P3** du type usuellement employé dans les techniques de *surfactant polymer flooding* actuellement connues (solutions dites « **COMPARATIF** »), à savoir le Flopaam 3630S commercialisé par SNF à la concentration de 2 g/L généralement préconisée pour ce type de polymère en *surfactant polymer flooding.*

Pour les différentes solutions, on a mesuré la turbidité de la solution à 50°C. Les résultats sont reportés dans le TABLEAU 1 ci-dessous, où la turbidité est donnée sur une échelle de 0 (=solution totalement transparente) à 1 (=solution totalement opaque), la valeur limite de **0,4** correspondant à la valeur seuil au-delà de laquelle la turbidité est considérée comme non acceptable.

Le TABLEAU 1 révèle une nette amélioration de la compatibilité entre les tensioactifs et les polymères P1 et P2, et ce sur toute la gamme de salinité évaluée, notamment aux salinités les plus élevées, où il est à noter que le polymère des solutions du test COMPARATIF mène à une démixtion, alors que les formulations intégrant les polymères P1 et P2 maintiennent une compatibilité acceptable. Il est intéressant de remarquer que pour des salinités élevées (i.e. respectivement supérieures à 16 g/L et 12 g/L pour P1 et pour P2) la formulation se structure sous forme de gel, ce qui se reflète par la présence de bulles crées par cisaillement de l'interface libre lors de l'homogénéisation par agitation des formulations, qui ne crèment pas et restent piégées *in situ.*

| Polymère présent | Teneur en sels (TDS en g/L) | | | | | | | | | | | | | | |
|---|---|---|---|---|---|---|---|---|---|---|---|---|---|---|---|
| | **3** | **4** | **5** | **6** | **7** | **8** | **9** | **10** | **11** | **12** | **13** | **14** | **15** | **16** | **17** |
| **P1** | 0.13 | 0.07 | 0.05 | 0.09 | 0.13 | 0.13 | 0.15 | 0.17 | 0.19 | 0.24 | 0.29 | 0.35 | 0.41 | 0.44 | 0.47 |
| **P2** | 0.09 | 0.12 | 0.10 | 0.13 | 0.12 | 0.11 | 0.15 | 0.19 | 0.22 | 0.30 | 0.43 | 0.52 | 0.67 | 0.71 | 0.78 |
| **P3** COMPA-RATIF | 0.24 | 0.23 | 0.37 | 0.54 | 0.66 | 0.71 | 0.69 | 0.70 | 0.72 | 0.74 | 0.74 | 0.80 | 0.83 | (***) | (***) |
| **Aucun** (TEMOIN) | 0.01 | 0.01 | 0.05 | 0.12 | 0.20 | 0.23 | 0.25 | 0.29 | 0.30 | 0.33 | 0.40 | 0.54 | 0.77 | 0.78 | 0.81 |

TABLEAU 1 : turbidités mesurées à 50°C pour les solutions testées

(***) : formulation totalement demixée

**Exemple 4** :

**Viscosité des mélanges polymères/tensioactifs**

On a mesuré la viscosité à 50°C de chacune des solutions de l'exemple 3 contenant 10 g/L de sels dissous (TDS) pour différents taux de cisaillement dans les conditions suivantes : en géométrie de Couette (rhéomètre LS300 - proRheo - géométrie MB1/MK1), on a réalisé une rampe logarithmique de taux de cisaillement de 100 $s^{-1}$ à 1 $s^{-1}$. La contrainte de cisaillement est mesurée et la viscosité est déduite en calculant le rapport de la contrainte sur le taux de cisaillement.

Les valeurs sont reportées sur le TABLEAU 2 ci-dessous, qui reflète la courbe d'écoulement des solutions, et d'où il ressort que les solutions à base des polymères P1 et P2 développent une viscosité plus importante que celle à base du polymère du test comparatif, même à des teneurs plus faible (1,5 g/L contre 2 g/L pour le COMPARATIF), ce qui reflète un autre intérêt particulier des polymères de l'invention, au moins d'un point de vue économique, dans la mesure où il permettent une amélioration de l'efficacité du balayage à des teneurs plus faibles en polymère.

**TABLEAU 2** : viscosité (en cP) pour différentes valeurs de vitesse de cisaillement (50°C)

| Polymère présent | Taux de cisaillement ($s^{-1}$) | | | | | | | | | | |
|---|---|---|---|---|---|---|---|---|---|---|---|
| | 1 | 1.18 | 1.93 | 3.16 | 5.18 | 8.48 | 13.90 | 22.76 | 32.28 | 61.05 | 100 |
| **P1** | 359.2 | 338.1 | 266.8 | 248.0 | 228.8 | 222.4 | 220.3 | 204.3 | 183.3 | 175.6 | 133.1 |
| **P2** | 1351 | 1236 | 877.0 | 688.0 | 468.5 | 425.7 | 375.8 | 227.7 | 183.2 | 175.1 | 144.1 |
| **P3 (COMPARATIF)** | 29.45 | 25.52 | 24.58 | 19.47 | 17.29 | 15.63 | 14.10 | 12.28 | 11.11 | 9.61 | 8.54 |

**Exemple 5 :**

**Diminution de la rétention des tensioactifs**

On a comparé la tendance qu'ont les tensioactifs à s'adsorber sur une roche avec les polymères de l'invention et avec d'autres polymères ou en l'absence de polymères.

Pour ce faire, on a mesuré pour des solutions du type décrites dans l'exemple 3, contenant 10 g/L de sels dissous (TDS) l'adsorption statique à température ambiante de tensioactifs sur une roche composée à 93 % de grès et à 7 % d'argile, selon le protocole décrit dans l'article SPE-174603. Les solutions testées sont celles de l'exemple 3, à la seule différence qu'elles comprennent une quantité différente de polymères, à savoir 500 ppm (hormis pour le TEMOIN, qui n'en comprend pas).

Les valeurs d'adsorption statique, exprimées en milligrammes de tensioactifs adsorbés par gramme de roche (mg/g) sont les suivantes, ce qui reflète que le polymère de l'invention maintient les avantages observés avec les polymères usuels, en plus d'obtenir les avantages précités :

| | |
|---|---|
| **Polymère P1-**500 ppm : | 5 mg/g |
| **Polymère P2-**500 ppm : | 4,8 mg/g |
| **COMPARATIF** : **Polymère P3** - 500 ppm : | 5 mg/g |
| **TEMOIN** - pas de polymère : | 7 mg/g |

**Revendications**

**1.** Formulation aqueuse adaptée à titre de fluide d'extraction pour la récupération assistée du pétrole, la formulation aqueuse comprenant :

(i) un tensioactif comprenant :

- au moins un premier tensioactif anionique de type sulfonate ; et
- au moins un deuxième tensioactif anionique choisi parmi les alkyl éther sulfates AES, les alkyl glyceryl ether sulfonates AGES, les alkyl ether carboxylates, les styril phénol alcoxylate sulfates, les styril phénol alcoxylate phosphates, et mélanges de ceux-ci ;
et

(ii) au moins un polymère tel qu'obtenu selon une étape (E) de polymérisation radicalaire micellaire dans laquelle on met en contact, au sein d'un milieu aqueux (M) :

- au moins un monomère hydrophile, solubilisé ou dispersé dans ledit milieu aqueux (M) ;
- au moins un monomère hydrophobe sous la forme d'une solution micellaire, ladite solution micellaire contenant, à l'état dispersé au sein du milieu (M), des micelles comprenant ledit au moins un monomère hydrophobe ; et
- au moins un amorceur de polymérisation radicalaire.

**2.** Formulation aqueuse selon la revendication 1, dans laquelle le tensioactif anionique de type sulfonate est sélectionné parmi le groupe comprenant un sulfonate d'oléfine interne ; un alkylarylsulfonate tel qu'un alkyl benzène sulfonate

ABS ; un sulfonate et/ou disulfonate de composés alpha-sulfocarbonyle ; et un sulfosuccinate et/ou sulfosuccinamate.

3. Formulation aqueuse selon la revendication 1, dans laquelle l'au moins un polymère comprend en outre au moins un agent de contrôle de polymérisation radicalaire.

4. Formulation aqueuse selon l'une des revendications 1 à 3, dans laquelle l'au moins un monomère hydrophile est choisi parmi :

- les acides carboxyliques éthyléniquement insaturés, les acides sulfoniques et les acides phosphoniques, et/ou leurs dérivés, tels que l'acide acrylique, l'acide méthacrylique, l'acide vinylsulfonique, l'acide (meth)allylsulfonique, l'acrylate de sulfoéthyle, le méthacrylate de sulfoéthyle, l'acrylate de sulfopropyle, le méthacrylate de sulfopropyle, l'acide 2-hydroxy-3-acryloyloxypropylsulfonique, l'acide 2-hydroxy-3-methacryloyloxypropylsulfonique, les acides styrenesulfoniques, l'acide 2-acrylamido-2-methylpropanesulfonique, l'acide vinylphosphonique, l'acide $\alpha$-methyl vinylphosphonique et l'acide allylphosphonique ; et leurs sels ;
- les esters d'acides mono- et di-carboxyliques $\alpha,\beta$-éthyléniquement insaturés avec C2-C3-alcanediols, par exemple, l'acrylate de 2-hydroxyethyle, le méthacrylate de 2-hydroxyethyle, l'éthacrylate de 2-hydroxyethyle, l'acrylate de 2-hydroxypropyle, le méthacrylate de 2-hydroxypropyle, l'acrylate de 3-hydroxypropyle, le méthacrylate de 3-hydroxypropyle et les (meth)acrylates de polyalkylène glycol ;
- les amides d'acides mono-carboxyliques $\alpha,\beta$-éthyléniquement insaturés et leurs dérivés N-alkyle et N,N-dialkyle tels que l'acrylamide, le méthacrylamide, le N-méthyl(meth)acrylamide, le le N,N-dimethyl(meth)acrylamide, le morpholinyl(meth)acrylamide, et le metholyl acrylamide ;
- le N-vinyllactames tels que la N-vinylpryolidone ou la N-vinylpiperidone ;
- les sulfobétaines ; et
- les mélanges et association de deux ou plusieurs des monomères précités.

5. Formulation aqueuse selon la revendication 4, dans laquelle l'au moins un monomère hydrophile comprend au moins un monomère (meth)acrylamide.

6. Formulation aqueuse selon la revendication 5, dans laquelle l'au moins un monomère (meth)acrylamide est de l'acrylamide et/ou de l'AMPS.

7. Formulation aqueuse selon l'une des revendications 1 à 6, dans laquelle l'au moins un monomère hydrophobe est choisi parmi :

- les monomères vinylaromatiques tels que le styrène, l'alpha methylstyrène, le parachlorométhylstyrène, le vinyltoluène, le 2-methylstyrene, le 4-methylstyrene, le 2-(n-butyl)styrène, le tertiobutyl styrène ou le 4-(n-decyl)styrène ;
- les composés vinyliques halogénés, tels que les halogénures de vinyle ou de vinylidène ;
- les esters d'acide mono-, di-carboxylique $\alpha,\beta$ éthyléniquement insaturés avec C4-C30-alcanols ;
- les esters d'alcool de vinyle ou d'allyle avec les acides monocarboxyliques en C1-C30 ;
- les esters d'acides mono- et di-carboxyliques $\alpha,\beta$ éthyléniquement insaturés avec un alcanediol en C4-C30 ;
- les amides primaires d'acides mono- et di-carboxyliques $\alpha,\beta$ éthyléniquement insaturés et les dérivés de N-alkyle (C4-C30) et N, N-dialkyle (C3-C30) ; et
- les monooléfines en C2-C8 et les hydrocarbures non aromatiques comprenant au moins une double liaison, par exemple, l'éthylène, le propylène, l'isobutylène, l'isoprène, le butadiène.

8. Formulation aqueuse selon la revendication 7, dans laquelle les monomères hydrophobes comprennent des monomères (méth)acrylate de lauryle LMA ou lauryle (meth)acrylamide LMAM.

9. Formulation aqueuse selon l'une des revendications 1 à 8, dans laquelle l'étape (E) est effectuée en présence d'un agent de contrôle.

10. Formulation aqueuse selon la revendication 9, dans laquelle l'agent de contrôle comprend une fonction xanthate -S(C=S)O-.

11. Procédé de récupération assistée du pétrole d'une formation souterraine, le procédé comprenant :

- une injection d'une formulation aqueuse selon l'une des revendication 1 à 9 dans une formation souterraine, par au moins un puits d'injection ; et
- une récupération, par au moins un puits de production, d'un fluide véhiculant le pétrole sortant de la formation souterraine.

**12.** Procédé selon la revendication 11, dans lequel :

- la formulation aqueuse est employée dans des conditions où l'association des polymères et des tensioactifs qu'elle comprend est mise en oeuvre dans un milieu comprenant des sels à une teneur supérieure ou égale à 10 g/L ; et/ou
- la formulation aqueuse est employée à une température supérieure à 50°C.

**13.** Procédé selon la revendication 12, dans lequel la teneur des sels est entre 10 g/L et 150 g/L.

**14.** Procédé selon la revendication 12 ou la revendication 13, dans lequel la température à laquelle la formulation aqueuse est employée est entre 70°C et 120°C.

## Patentansprüche

**1.** Wässrige Formulierung, die sich als Extraktionsfluid für die tertiäre Erdölgewinnung eignet, wobei die wässrige Formulierung Folgendes umfasst:

(i) ein Tensid, das Folgendes umfasst:

- mindestens ein erstes anionisches Tensid vom Typ Sulfonat; und
- mindestens ein zweites anionisches Tensid, das aus den Alkylethersulfaten AES, den Alkylglycerylethersulfonaten AGES, den Alkylethercarboxylaten, den Styrylphenolalkoxylatsulfaten, den Styrylphenolalkoxylatphosphaten und deren Mischungen ausgewählt ist;

und
(ii) mindestens ein Polymer wie es gemäß einem Schritt (E) der radikalischen Mizellen-Polymerisation erhalten wird, in welchem innerhalb eines wässrigen Milieus (M) Folgendes in Kontakt gebracht wird:

- mindestens ein hydrophiles Monomer, welches in dem wässrigen Milieu (M) in Lösung gebracht oder dispergiert ist;
- mindestens ein hydrophobes Monomer in Form einer Mizellen-Lösung, wobei die Mizellen-Lösung Mizellen, welche das mindestens eine hydrophobe Monomer umfassen, derart enthält, dass sie in dispergiertem Zustand in dem Milieu (M) vorliegen; und
- mindestens einen radikalischen Polymerisationsinitiator.

**2.** Wässrige Formulierung nach Anspruch 1, wobei das anionische Tensid vom Typ Sulfonat aus der Gruppe ausgewählt ist, die ein internes Olefinsulfonat; ein Alkylarylsulfonat wie etwa ein Alkylbenzolsulfonat ABS; ein Sulfonat und/oder Disulfonat von alpha-Sulfocarbonylverbindungen; und ein Sulfosuccinat und/oder Sulfosuccinamat umfasst.

**3.** Wässrige Formulierung nach Anspruch 1, wobei das mindestens eine Polymer darüber hinaus mindestens ein Mittel zur Steuerung der radikalischen Polymerisation umfasst.

**4.** Wässrige Formulierung nach einem der Ansprüche 1 bis 3, wobei das mindestens eine hydrophile Monomer aus Folgendem ausgewählt ist:

- den Carbonsäuren ethylenisch ungesättigter Art, Sulfonsäuren und Phosphonsäuren und/oder deren Derivaten wie etwa Acrylsäure, Methacrylsäure, Vinylsulfonsäure, (Meth)allylsulfonsäure, Sulfoethylacrylat, Sulfoethylmethacrylat, Sulfopropylacrylat, Sulfopropylmethacrylat, 2-Hydroxy-3-acryloyloxypropylsulfonsäure, 2-Hydroxy-3-methacryloyloxypropylsulfonsäure, den Styrolsulfonsäuren, 2-Acrylamido-2-methylpropansulfonsäure, Vinylphosphonsäure, $\alpha$-Methylvinylphosphonsäure und Allylphosphonsäure; sowie deren Salzen;
- den Estern, wie sie ethylenisch $\alpha,\beta$-ungesättigte Mono- und Dicarbonsäuren mit C2-C3-Alkandiolen bilden, zum Beispiel 2-Hydroxyethylacrylat, 2-Hydroxyethylmethacrylat, 2-Hydroxyethylethacrylat, 2-Hydroxypropylacrylat, 2-Hydroxypropylmethacrylat, 3 -Hydroxypropylacrylat, 3 -Hydroxypropylmethacrylat sowie den Polyalkylenglykol(meth)acrylaten;
- den Amiden ethylenisch α,β-ungesättigter Monocarbonsäuren und deren N-Alkyl- und N,N-Dialkylderivaten wie etwa Acrylamid, Methacrylamid, N-Methyl(meth)acrylamid, N,N-Dimethyl(meth)acrylamid, Morpholinyl(meth)acrylamid und Metholylacrylamid;
- den N-Vinyllactamen wie etwa N-Vinylpyrrolidon oder N-Vinylpiperidon;
- den Sulfobetainen; und
- den Mischungen und gemeinsamen Verwendungen zweier oder mehrerer der vorstehend genannten Monomere.

**5.** Wässrige Formulierung nach Anspruch 4, wobei das mindestens eine hydrophile Monomer mindestens ein (Meth)acrylamid-Monomer umfasst.

**6.** Wässrige Formulierung nach Anspruch 5, wobei es sich bei dem mindestens einen (Meth)acrylamid-Monomer um Acrylamid und/oder AMPS handelt.

**7.** Wässrige Formulierung nach einem der Ansprüche 1 bis 6, wobei das mindestens eine hydrophobe Monomer aus Folgendem ausgewählt ist:

- den vinylaromatischen Monomeren wie etwa Styrol, alpha-Methylstyrol, para-Chlormethylstyrol, Vinyltoluol, 2-Methylstyrol, 4-Methylstyrol, 2-(n-Butyl)styrol, tert.-Butylstyrol oder 2-(n-Decyl)styrol;
- den halogenierten Vinylverbindungen wie etwa den Vinyl- oder Vinyliden-Halogeniden;
- den Estern, wie sie ethylenisch α,β-ungesättigte Mono-, Dicarbonsäuren mit C4-C30-Alkoholen bilden;
- den Estern, wie sie Vinyl- oder Allylalkohol mit C1-C30-Monocarbonsäuren bildet;
- den Estern, wie sie ethylenisch α,β-ungesättigte Mono-, und Dicarbonsäuren mit einem C4-C30-Alkandiol bilden;
- den primären Amiden von ethylenisch α,β-ungesättigten Mono-, und Dicarbonsäuren und den Derivaten von N-Alkyl(C4-C30) und N,N-Dialkyl(C3-C30); und
- den C2-C8-Monoolefinen und den nicht-aromatischen Kohlenwasserstoffen, die mindestens eine Doppelbindung umfassen, wie beispielsweise Ethylen, Propylen, Isobutylen, Isopren, Butadien.

**8.** Wässrige Formulierung nach Anspruch 7, wobei die hydrophoben Monomere die Monomere Lauryl(meth)acrylat LMA oder Lauryl(meth)acrylamid LMAM umfassen.

**9.** Wässrige Formulierung nach einem der Ansprüche 1 bis 8, wobei der Schritt (E) in Gegenwart eines Steuerungsmittels durchgeführt wird.

**10.** Wässrige Formulierung nach Anspruch 9, wobei das Steuerungsmittel eine funktionelle Xanthatgruppe -S(C=S)O- umfasst.

**11.** Verfahren zur tertiären Erdölgewinnung aus einer unterirdischen Formation, wobei das Verfahren Folgendes umfasst:

- Einleiten einer wässrigen Formulierung nach einem der Ansprüche 1 bis 9 in eine unterirdische Formation, durch mindestens einen Einleitungsschacht; und
- Auffangen, durch mindestens einen Förderschacht, eines Fluids, in welchem das Erdöl enthalten ist, welches aus der unterirdischen Formation ausgetreten ist.

**12.** Verfahren nach Anspruch 11, wobei:

- die wässrige Formulierung unter Bedingungen verwendet wird, unter welchen die gemeinsam vorliegenden Polymere und Tenside, welche sie umfasst, in einem Milieu zum Einsatz kommen, das Salze zu einem Gehalt von mindestens 10 g/L umfasst, und/oder
- die wässrige Formulierung bei einer Temperatur von mehr als 50 °C zum Einsatz kommt.

**13.** Verfahren nach Anspruch 12, wobei der Gehalt an Salzen zwischen 10 g/L und 150 g/L beträgt.

**14.** Verfahren nach Anspruch 12 oder Anspruch 13, wobei die Temperatur, bei welcher die wässrige Formulierung zum

Einsatz kommt, zwischen 70 °C und 120 °C beträgt.

**Claims**

1. Aqueous formulation suitable as extraction fluid in enhanced oil recovery, the aqueous formulation comprising:

   (i) a surfactant comprising:

   - at least one first anionic surfactant of sulfonate type; and
   - at least one second anionic surfactant selected from alkyl ether sulfates AESs, alkyl glyceryl ether sulfonates AGESs, alkyl ether carboxylates, styrylphenol alkoxylate sulfates, styrylphenol alkoxylate phosphates and mixtures thereof,

   and
   (ii) at least one polymer as obtained according to a step (E) of micellar radical polymerization in which the following are brought into contact, within an aqueous medium (M):

   - at least one hydrophilic monomer, dissolved or dispersed in said aqueous medium (M);
   - at least one hydrophobic monomer in the form of a micellar solution, said micellar solution containing, in the dispersed state within the medium (M), micelles comprising said at least one hydrophobic monomer; and
   - at least one radical polymerization initiator.

2. Aqueous formulation according to claim 1, wherein the anionic surfactant of sulfonate type is selected from the group comprising an internal olefin sulfonate; an alkylarylsulfonate, such as an alkylbenzenesulfonate ABS; a sulfonate and/or disulfonate of α-sulfocarbonyl compounds; and a sulfosuccinate and/or sulfosuccinamate.

3. Aqueous formulation according to claim 1, wherein the at least one polymer further comprises at least one radical polymerization control agent.

4. Aqueous formulation according to one of claims 1 to 3, wherein the at least one hydrophilic monomer is selected from:

   - carboxylic acids which are ethylenically unsaturated, sulfonic acids and phosphonic acids, and/or derivatives thereof, such as acrylic acid, methacrylic acid, vinylsulfonic acid, (meth)allylsulfonic acid, sulfoethyl acrylate, sulfoethyl methacrylate, sulfopropyl acrylate, sulfopropyl methacrylate, 2-hydroxy-3-acryloyloxypropylsulfonic acid, 2-hydroxy-3-methacryloyloxypropylsulfonic acid, styrenesulfonic acids, 2-acrylamido-2-methylpropanesulfonic acid, vinylphosphonic acid, α-methylvinylphosphonic acid and allylphosphonic acid; and salts thereof,
   - esters of α,β-ethylenically unsaturated mono- and dicarboxylic acids with C2-C3 alkanediols, for example 2-hydroxyethyl acrylate, 2-hydroxyethyl methacrylate, 2-hydroxyethyl ethacrylate, 2-hydroxypropyl acrylate, 2-hydroxypropyl methacrylate, 3-hydroxypropyl acrylate, 3-hydroxypropyl methacrylate and polyalkylene glycol (meth)acrylates;
   - amides of α,β-ethylenically unsaturated monocarboxylic acids and N-alkyl and N,N-dialkyl derivatives thereof, such as acrylamide, methacrylamide, N-methyl(meth)acrylamide, N,N-dimethyl(meth)acrylamide, morpholinyl(meth)acrylamide, and metholylacrylamide;
   - N-vinyllactams, such as N-vinylpyrrolidone or N-vinylpiperidone;
   - sulfobetaines; and
   - mixtures and combinations of two or more of the abovementioned monomers.

5. Aqueous formulation according to claim 4, wherein the at least one hydrophilic monomer comprises at least one (meth)acrylamide monomer.

6. Aqueous formulation according to claim 5, wherein the at least one (meth)acrylamide monomer is acrylamide and/or AMPS.

7. Aqueous formulation according to one of claims 1 to 6, wherein the at least one hydrophobic monomer is selected from:

- vinylaromatic monomers, such as styrene, α-methylstyrene, para-chloromethylstyrene, vinyltoluene, 2-methylstyrene, 4-methylstyrene, 2-(n-butyl)styrene, tert-butylstyrene or 4-(n-decyl)styrene;
- halogenated vinyl compounds, such as vinyl or vinylidene halides;
- esters of α,β-ethylenically unsaturated mono- or dicarboxylic acid with C4-C30 alkanols;
- esters of vinyl or allyl alcohol with C1-C30 monocarboxylic acids;
- esters of α,β-ethylenically unsaturated mono- and dicarboxylic acids with a C4-C30 alkanediol;
- primary amides of α,β-ethylenically unsaturated mono- and dicarboxylic acids and N-(C4-C30)alkyl and N,N-di(C3-C30)alkyl derivatives; and
- C2-C8 monoolefins and non-aromatic hydrocarbons comprising at least one double bond, for example ethylene, propylene, isobutylene, isoprene or butadiene.

**8.** Aqueous formulation according to claim 7, wherein the hydrophobic monomers comprise lauryl (meth)acrylate LMA or lauryl(meth)acrylamide LMAM monomers.

**9.** Aqueous formulation according to one of claims 1 to 8, wherein step (E) is carried out in the presence of a control agent.

**10.** Aqueous formulation according to claim 9, wherein the control agent comprises a xanthate -S(C=S)O- functional group.

**11.** Process for enhanced oil recovery from an underground formation, the process comprising:

- an injection of an aqueous formulation according to one of claims 1 to 9 into an underground formation, via at least one injection well; and
- a recovery, via at least one production well, of a fluid conveying the oil leaving the underground formation.

**12.** Process according to claim 11, wherein:

- the aqueous formulation is employed under conditions where the combination of the polymers and of the surfactants which it comprises is used in a medium comprising salts at a content of greater than or equal to 10 g/l; and/or
- the aqueous formulation is employed at a temperature of greater than 50°C.

**13.** Process according to claim 12, wherein the content of the salts is between 10 g/l and 150 g/l.

**14.** Process according to claim 12 or claim 13, wherein the temperature at which the aqueous formulation is employed is between 70°C and 120°C.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2014167059 A1
- WO 2014167056 A1
- WO 9630421 A
- WO 9801478 A
- WO 9935178 A
- WO 9858974 A
- WO 0075207 A
- WO 0142312 A
- WO 9935177 A
- WO 9931144 A
- FR 2794464
- WO 0226836 A
- WO 2016177817 A
- US 4565647 A
- WO 03068827 A
- WO 03068848 A
- WO 2005021612 A


### Littérature non-brevet citée dans la description


- *Journal de Physique II,* 1993, vol. 3, 1255-1270
- *Macromolecular Chem. Physics,* 2001, vol. 202 (8), 1384-1397